# FASCICULE DE BREVET EUROPEEN

(11) **EP 1 276 686 B1**
(45) Date de publication et mention de la délivrance du brevet: **18.05.2005**
(21) Numéro de dépôt: 01921467.5
(22) Date de dépôt: 04.04.2001
(51) Int. Cl.: B65G 39/14, B65G 39/16, B65G 39/04

(54) **DISPOSITIF PERFECTIONNE DE CENTRAGE AUTOMATIQUE SUR CONVOYEURS A BANDES**
SELBSTZENTRIERENDE VORRICHTUNG FÜR FÖRDERBÄNDER
IMPROVED DEVICE FOR AUTOMATIC CENTRING ON BELT CONVEYORS

(30) Priorité: 25.04.2000 FR 0005550
(43) Date de publication de la demande: 22.01.2003
(73) Titulaire: Valcalda, Florent, F-95490 VAUREAL (FR)
(72) Inventeur: Valcalda, Florent, F-95490 VAUREAL (FR)
(74) Mandataire: Dupuis, François
(86) Numéro de dépôt international: PCT/FR2001/001003
(87) Numéro de publication internationale: WO 2001/081214

(56) Documents cités:
- EP-A- 0 504 036

## Description

L'invention concerne un dispositif selon le préambule de la revendication 1, au secteur technique du matériel de manutention et de transport en continu de matériaux par convoyeurs à bandes, et plus particulièrement des convoyeurs à bandes creusées en auge et supportées par des rouleaux souples flexibles.

Le demandeur est titulaire du brevet européen EP-B-504 036, qui vise un dispositif de centrage automatique sur convoyeur à bandes du type précité, et qui est commercialisé sous licence d'une manière satisfaisante selon un développement régulier qui valide et justifie les choix techniques indiqués dans le brevet européen précité.

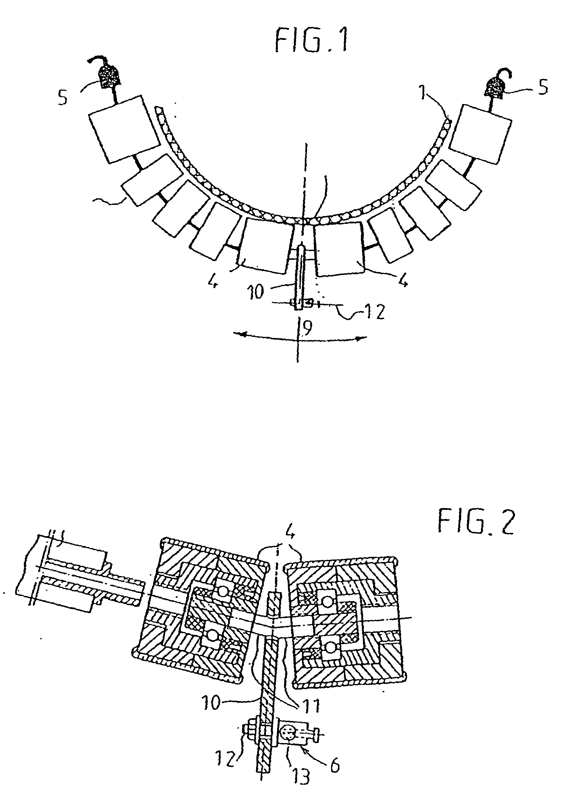

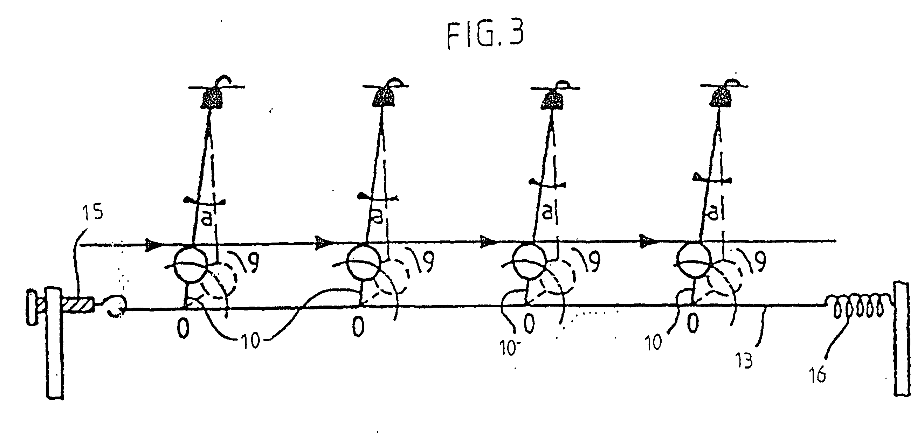

Pour faciliter la compréhension de l'invention dans le perfectionnement apporté, on fait référence plus spécifiquement à l'art antérieur représentée figures 1, 2 et 3 des dessins.

Plus particulièrement, selon le brevet européen précité, le dispositif de centrage automatique du convoyeur à bandes transporteuses souples, est supporté par deux rangées de rouleaux flexibles (4) comportant une fixation centrale (9) unique et assurant un angle de pincement positif, qui rappelle la bande mise en forme d'auge, ayant un équilibre dynamique et stable sur l'axe du transporteur.

La fixation centrale unique (9) qui est située plus bas que les points de fixation extérieurs (5) et commune à chaque couple desdits rouleaux flexibles (4), est mobile, et se voit imposée lorsque son altitude varie avec la charge, une trajectoire courbe s'étendant en direction de la trajectoire longitudinale de la bande par la rotation autour d'un axe fixe (12) du levier basculant (10) qui porte la fixation centrale unique et mobile, de façon à réduire l'angle de pincement en fonction de la charge transportée.

La trajectoire de la fixation centrale tournant autour de l'axe fixe est réglée de façon que le pincement s'annule pour la valeur maximale de la charge transportée.

Un convoyeur mettant en oeuvre les dispositifs de centrage automatiques précités, utilise ainsi plusieurs guirlandes disposées en alignement sur le trajet à considérer pour assurer le transport et la manutention de la charge.

A cet effet, les fixations centrales (9) de plusieurs ensembles de supports souples sont reliées entre elles par le biais de leurs leviers respectifs à un câble de mise en tension. L'axe fixe (12) de chacun desdits leviers est reliée à une patte d'attache (6) solidarisée audit câble disposé selon axe longitudinal (13), du convoyeur qui est mis en tension, entre une vis de réglage (15) et des moyens de rappel de tension (16), eux-mêmes solidaires du châssis du convoyeur.

Les convoyeurs ainsi décrits mettant en oeuvre le dispositif de centrage automatique de la bande, sont notamment commercialisés sous la marque « *VALROL* » en France et « *WACKEM* » en Italie et en Espagne.

Sur un convoyeur à bande, le « Brin porteur » supporte les variations de charges dues aux variations de débit des produits transportés, le « Brin de retour » du convoyeur subit ces mêmes variations de charges dans plusieurs cas précis :
- Lorsque le convoyeur transporte également des produits sur le « Brin de retour » en auquel cas il est soumis aux mêmes règles que le « Brin porteur »,
- Lorsque dans certaines zones du convoyeur, courbes convexes (centre en bas) ou courbes sur le plan horizontal, les variations de débit induisent des variations de tensions dans la bande et de ce fait, des variations de charges sur l'ensemble des guirlandes de rouleaux dans la zone considérée, d'ou des variations souhaitables de l'angle de pincement des rouleaux formant ces guirlandes.

L'application du brevet EP-B-504 036 avec en particulier le câble central et les dispositifs de tension associés ainsi que le levier basculant et les pattes d'attaches sur câble, a donc sa place aussi bien sur le « Brin porteur » que sur le « Brin de retour ».

Bien que cette exploitation soit parfaitement satisfaisante, la démarche du Demandeur s'est orientée sur une tentative d'améliorer encore le fonctionnement et la standardisation du convoyeur du dispositif de centrage automatique des bandes et des composants qui lui sont associés.

Cette démarche résulte de divers constats.

Tout d'abord, la fixation centrale unique (9) décrite dans le brevet EP-B-504 036 inclut, de manière monobloc, un arbre coudé (11) en V sur lequel sont rapportés de manière fixe deux rouleaux (4).

Cette fixation centrale unique, dont l'altitude varie en fonction de la charge transportée, supporte le levier basculant (10) tournant autour de l'axe fixe (12), permettant le réglage de l'angle de pincement à vide et la réduction de cet angle de pincement an fur et à mesure de l'augmentation de la charge transportée.

Cette fixation centrale unique est susceptible de présenter quelques inconvénients qui ne remettent pas néanmoins en cause le concept même de l'invention principale.

Tout d'abord, l'angle formé entre l'arbre coudé (11) et l'axe horizontal est constant, quelle que soit la courbure de l'ensemble formé par la pièce centrale unique (9) et les deux rangée de rouleaux souples (4).

Cette pièce centrale unique oblige le montage des deux rouleaux sur l'axe coudé formant ainsi un ensemble solidaire de l'axe, ce qui rend indémontable le levier basculant, et oblige à la dépose de l'ensemble de la pièce centrale unique si l'un des éléments seulement est détérioré.

Cette situation peut être gênante, car la fixation centrale est celle qui est soumise le plus aux sollicitations mécaniques, et il est quelque fois nécessaire d'envisager son remplacement avec de nouvelles pièces de rechange.

On comprend parfaitement que si c'est l'un des rouleaux qui est détérioré, le remplacement de l'ensemble de la fixation centrale surenchérit le coût de réparation et de changement.

Un autre inconvénient réside dans le fait que ladite fixation centrale unique telle que décrite dans le brevet EP-B-504 036 exploité, en raison de son arbre coudé, oblige lors des opérations de stockage ou de livraison, à avoir des emballages spéciaux du fait de la non rectitude de la guirlande formée par la pièce centrale, les deux rangées de rouleaux souples et les fixations d'extrémités.

La démarche du demandeur a donc été, à partir de ces constats, d'examiner comment optimiser le concept général breveté dans le brevet EP-B-504 036 afin de réduire les coûts de réparation, faciliter le changement de rouleaux en cas de détérioration, et donner également une plus grande souplesse sur l'ensemble de fixation centrale, en particulier sur les rouleaux qui même adjacents, n'ont pas forcément la même charge à supporter.

La démarche du demandeur vise donc à optimiser ce système de fixation.

Simultanément, la démarche du demandeur a été de rationaliser et de standardiser les différents composants utilisables dans ce concept de fixation aussi bien pour le « Brin porteur » du convoyeur que pour son « Brin de retour » chaque fois que celui ci de part les variations des charges transportées ou par les variations de tensions dues aux variations de débit nécessitera une variation de l'angle de pincement.

L'ensemble de ces paramètres ont donc conduit le demandeur à rechercher une solution technique qui ne nuise pas au bon fonctionnement du concept breveté dans le brevet EP-B-504 036, mais qui offre en plus des améliorations et des gains de productivité substantiels pour l'exploitation de la présente invention.

Ces buts et d'autres encore ressortiront bien de la suite de la description.

Selon l'invention, le dispositif comporte les caractéristiques de la revendication 1.

Ces caractéristiques et d'autres ressortiront bien de la suite de la description.

Pour fixer l'objet de l'invention illustrée de manière non limitative aux figures des dessins :
La figure 1 représente l'art antérieur tel que défini par le brevet EP-B-504 036 du demandeur, relatif au concept général du dispositif de centrage automatique de la bande sur convoyeurs.
La figure 2 est une vue partielle en coupe illustrant le détail de la fixation centrale selon l'art antérieur défini par le brevet EP-B-504 036 précité.
La figure 3 est une vue à caractère schématique illustrant le dispositif d'ajustement du point fixe pour la fixation centrale selon le brevet précité.

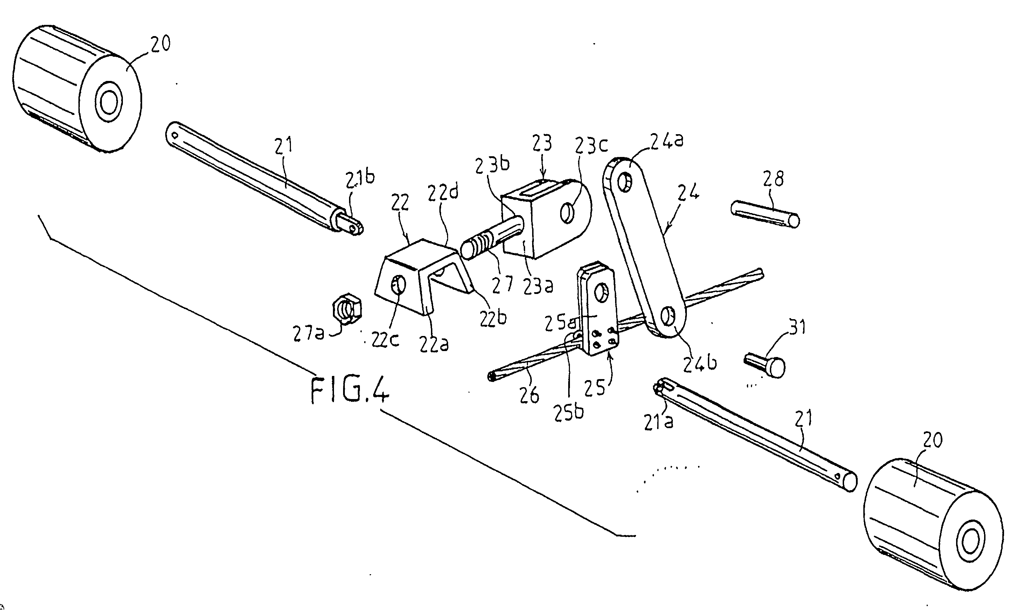

La figure 4 est une vue partielle de la fixation centrale selon l'invention dans une position éclatée avant montage de ses éléments.

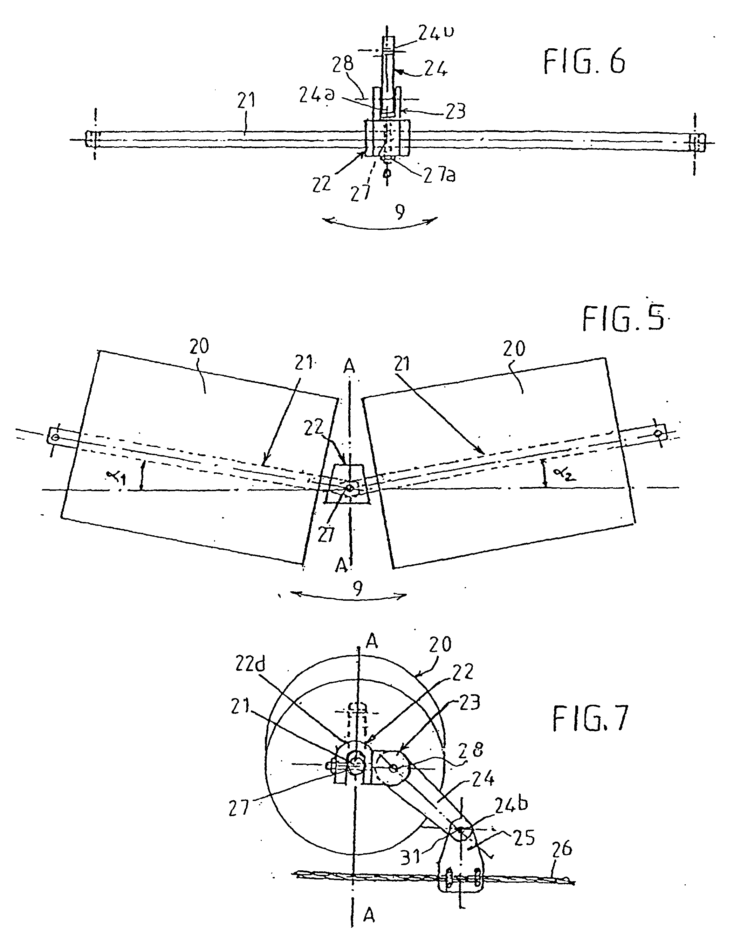

La figure 5 est une vue partielle et de face du dispositif selon l'invention.
La figure 6 est une vue de dessus selon la figure 5.
La figure 7 est une vue partielle à partir de la ligne AA montrant la relation du dispositif de l'invention avec le système de tension du câble.
La figure 8 est une vue de côté illustrant le dispositif de l'invention applicable à la liaison centrale dite « brin de retour ».
La figure 9 est une vue dans l'axe du convoyeur de la figure 8.

Afin de rendre plus concret l'objet de l'invention, on va la décrire maintenant d'une manière non limitative illustrée aux figures des dessins.

La fixation centrale est référencée par (9) par analogie à la description du brevet EP-B-504 036. Elle constitue une pièce centrale unique mais qui, selon l'invention, est constituée de plusieurs éléments distincts, démontables les uns par rapport aux autres et permettant de répondre aux objectifs souhaités et visés dans l'invention.

Ces éléments distincts comprennent successivement deux rouleaux (20) montés libres en rotation sur leurs axes (21) indépendants orientés en V, un moyen (22) de liaison centrale des axes selon une angulation déterminée, un moyen d'attache (23) solidaire du moyen de liaison (22) des axes, ledit moyen d'attache (23) assurant la réception et articulation d'un levier basculant (24) assujetti lui-même à une patte d'attache (25) montée fixe sur le câble tendeur (26).

Plus particulièrement, les axes (21) desdits rouleaux (20) présentent des profils de liaison (21a-21b) complémentaires tenons/mortaises ou équivalents, et susceptibles de constituer un assemblage mâle et femelle, la liaison étant obtenue par un axe de liaison (27) ou équivalent traversant le moyen de liaison centrale précité (22), ou autre mode de liaison.

Le moyen de liaison centrale (22) a la configuration d'un étrier profilé en U, dont les ailes (22a-22b) sont aménagées avec des ouvertures (22c) permettant le passage et l'introduction de l'axe de liaison (27) dans le profil d'extrémités (21a-21b) des axes supports de rouleaux (20), un écrou (27a) assurant la tenue de l'ensemble.

Le moyen d'attache (23) du levier basculant (24) est configuré sous forme d'une chape profilée en U ou autre configuration équivalente, pouvant être rendue démontable par rapport à l'étrier (22) précité de la manière suivante.

La face de fond (23a) extérieure de ladite chape (23) est susceptible de venir en appui sur la face extérieure (22d) d'une des ailes de l'étrier (22). La face de fond (23a) de la chape susceptible de présenter une ouverture (23b) permet le passage de l'axe de liaison (27) et de retenue des axes (21) supports de rouleaux (20), un boulonnage (27a) étant disposé en bout dudit axe mâle pour assurer le blocage de l'ensemble.

En conséquence, le vissage par boulonnage ou équivalent permet de solidariser de manière ferme ladite chape (23) de ce levier basculant (24) par rapport à l'étrier support (22). La tête de l'axe de liaison (27) vient en appui contre la face interne de la chape.

Sans sortir du cadre de l'invention, on peut imaginer que l'attache et le levier basculant de l'étrier soient réalisés en une seule pièce monobloc obtenue par fonderie ou équivalent, leur forme étant alors adaptée pour permettre d'une part, la réception des extrémités des axes supports de rouleaux et leur liaison, et d'autre part, l'insertion du levier basculant et sa liaison.

La forme en chape (23) est susceptible de présenter sur ses ailes (23b) les ouvertures (23c) permettant l'insertion d'un élément de liaison (28) traversant l'extrémité supérieure du levier basculant. Ce moyen de liaison est du type vis-écrou ou équivalent.

Le levier basculant (24) est donc monté libre par rapport à l'axe (28) précité à son extrémité (24a) et peut être démonté. Il suffit alors d'enlever tout moyen de verrouillage qui serait associé sur l'axe de liaison le concernant, type goupille ou autre.

L'autre extrémité (24b) du levier (24) basculant est articulée sur la patte d'attache (25) fixée sur le câble tendeur. Cette patte d'attache est du type de celle décrite dans le brevet EP précité. Elle comprend deux plaques (25a-25b) jointives entre elles par un moyen de liaison et autorisant l'insertion dans le volume intérieur ainsi définit du câble tendeur (26). Une vis de blocage (31) ou équivalent assure la liaison de l'extrémité basse du levier basculant avec la patte d'attache (25). La liaison peut être à caractère démontable de préférence. Le câble est susceptible de recevoir comme précédemment plusieurs ensembles de fixation centrale du type précité avec les éléments de tension et de rappel élastique comme indiqué précédemment.

Cette disposition est particulièrement avantageuse en ce qu'elle répond aux différents besoins constatés à l'origine. De par le montage libre des deux rouleaux supérieurs par rapport à leur axe de liaison, elle permet une variation des angles α1 et α2 formés par lesdits axes des rouleaux avec l'axe horizontal de l'ensemble ainsi formé et ce, en fonction de la déformation de la courbure de la guirlande avec la pièce centrale de fixation des rouleaux souples lors des variations d'amplitude de la fixation centrale unique engendrée par la variation des charges transportées lais également en fonction du rayon de courbure de la demi-circonférence induite par la variation des largueurs des bandes utilisées.

Cette disposition permet également de réguler l'espacement entre les jupes des rouleaux composant la pièce centrale et de réduire cet espacement en charge évitant ainsi la pénétration de la bande entre les deux jupes des rouleaux.

On autorise ainsi leur déplacement angulaire en azimut tout en limitant ces déplacements angulaires de valeur définie. La pièce d'attache des extrémités des axes des rouleaux constituée de l'étrier (22), définit l'axe du mouvement angulaire et limite ce mouvement aux valeurs définies préalablement.

La pièce formant étrier suivra donc les variations d'altitude dç la fixation centrale unique ainsi formée entraînant dans ce mouvement l'attache (23) du levier basculant (24) et le levier basculant se verra imposé lorsque J'altitude de la pièce centrale varie avec la charge transportée, une trajectoire courbe s'étendant en direction de la trajectoire longitudinale de la bande autour d'un axe fixe du levier basculant, de façon à réduire l'angle de pincement quand s'accroît la charge transportée.

Comme précédemment, la trajectoire courbe de la pièce centrale unique est réglée de façon à ce que le pincement s'annule lorsque la valeur maximale de la charge transportée est obtenue.

L'invention permet ainsi de répondre de manière très satisfaisante aux problèmes posés initialement. En cas de détérioration de l'un des composants, il est facile de les démonter et de procéder au changement . Cette opération peut être effectuée par quiconque, l'essentiel étant ensuite de procéder au réglage des angles de pincement.

Cette amélioration selon l'invention s'applique aussi bien à la bande supérieure du convoyeur à bande que pour le brin de retour.

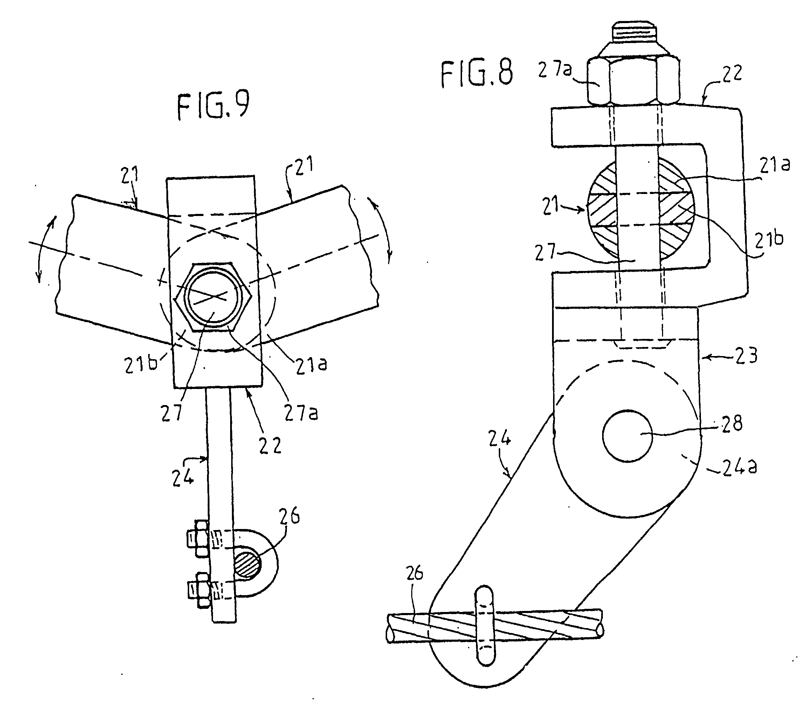

On a ainsi représenté aux figures 8 et 9 le même agencement s'agissant des brins de retour avec les mêmes composants, permettant donc incontestablement une standardisation des éléments composant la fixation centrale de l'invention aussi bien pour la bande supérieure que pour le brin de retour.

Il s'agit d'un avantage non négligeable qui permet de réduire les coûts de fabrication de manière substantielle, de faciliter la rechange. Il n'y a pas de multiplication de pièces en fonction de la bande supérieure ou du brin de retour et l'adaptabilité in situ est donc aisée.

Si le critère de démontabilité est un but recherché, il est envisageable, sans modifier le concept de l'invention et ses conditions de fonctionnement, que ledit levier soit en position fixe à l'une ou à ses deux extrémités. Cependant, le contrôle et la réalisation de l'angle de pincement est plus délicat à obtenir.

Les avantages ressortent bien de l'invention et on souligne la simplicité de celle-ci, la suppression des emballages spécifiques à la fixation centrale telle que définie dans le brevet européen EP-B-504 036.

En situation de transport et d'emballage, le montage spécifique des rouleaux (20) sur leurs axes indépendants (21) articulés sur la pièce de liaison (22) permet de les présenter avec l'ensemble de la guirlande correspondante et des crochets de suspension associés, dans une partie rectiligne facilitant leur conditionnement

## Revendications

1. Dispositif perfectionné de centrage automatique sur convoyeur à bandes supportées par des rouleaux (20) souples en guirlande, le pincement variant avec la charge transportée, le dispositif étant du type incluant deux fixations laterales (5) et une fixation centrale recevant les rouleaux (20) orientés en angulation en V, entre lesquels est disposé une extrémité supérieure d'un levier basculant (24) assujetti à un mouvement selon une trajectoire courbe en fonction de la variation d'altitude due à la charge du convoyeur, ledit levier (24) coopérant à son extrémité inférieure avec une patte d'attache solidarisée à un câble (26) réglable en tension par rapport au châssis porteur du convoyeur, lesdits rouleaux (20) de la fixation centrale sont montés libres en rotation sur leurs axes indépendants (21) orientés en V,
**caractérisé en ce que** lesdits axes (21) étant rendus solidaires et de manière démontable à une extrémité en regard, selon une angulation donnée, par un moyen de liaison centrale (22), ledit moyen de liaison centrale (22) étant solidarisé à un moyen d'attache (23) permettant la réception d'une extrémité du levier basculant (24) de manière démontable et l'articulation du levier basculant (24), dont l'autre extrémité est solidarisée à la patte d'attache (25) liée au câble tendeur (26)

2. Dispositif selon la revendication 1, **caractérisé en ce que** le montage libre des rouleaux à leurs axes de liaison avec le moyen de liaison (22) assure une fonction autorisant la variation des angles α1 et α2 formés par lesdits axes de rouleaux et l'axe horizontal de l'ensemble pour tenir compte de la variation de charge.

3. Dispositif selon l'une quelconque des revendications 1 et 2, **caractérisé en ce que** les axes (21) des rouleaux (20) de la fixation centrale présentent des profils de liaison (21a-21b) complémentaires par assemblage mâle-femelle ou autre avec un axe de liaison (27) associé.

4. Dispositif selon l'une quelconque des revendications 1 à 3, **caractérisé en ce que** le moyen (22) de liaison centrale est un étrier profilé en U dont les ailes (22a-22b) sont aménagées avec des ouvertures (22c) autorisant l'insertion de l'axe de liaison (27) des extrémités (21a-21b) des axes support des rouleaux (20).

5. Dispositif selon la revendication 4, **caractérisé en ce que** le moyen d'attache (23) du levier basculant (24) est configuré sous forme d'une chape profilée en U solidarisée de manière démontable par rapport à l'étrier.

6. Dispositif selon la revendication 5, **caractérisé en ce que** la face de fond (23a) de ladite chape (23) disposée en appui sur la face extérieure (22d) de l'une des ailes de l'étrier, présente une ouverture (23b) autorisant le passage de l'axe de liaison (27) et de retenue des axes support (21) des rouleaux, un boulonnage (27a) assurant le blocage de l'ensemble.

7. Dispositif selon la revendication 5, **caractérisé en ce que** le levier basculant est fixé par une extrémité à ladite chape par un moyen de liaison (28) traversant ses ailes (23b) par des ouvertures (23c), l'extrémité inférieure étant articulée sur la patte d'attache (25) fixée sur le câble tendeur.

8. Dispositif selon l'une quelconque des revendications 1 à 7, **caractérisé** dans son application aux bandes supérieures et au brin de retour du convoyeur à bandes.

## Patentansprüche

1. Selbstzentrierende Vorrichtung für Förderbänder, die von weichelastischen Girlandenrollen (20) getragen werden, wobei die Einklemmung je nach der zu transportierenden Last variiert, und die Vorrichtung folgendes besitzt : zwei seitliche Befestigungen (5) und eine mittlere Befestigung, welche die Rollen (20) aufnimmt, die V-förmig abgeknickt sind, und zwischen denen ein oberes Ende eines Kipphebels (24) angeordnet ist, der mit einer Bewegung entlang einer Steilbahn in Abhängigkeit von der Veränderung der Höhe aufgrund der Last des Förderbandes verbunden ist, wobei der Hebel (24) an seinem unteren Ende mit einer Befestigungsklemme zusammenwirkt, welche mit einem Seil (26) verbunden ist, dessen Spannung gegenüber dem Tragrahmen des Förderbandes eingestellt wird, und wobei die Rollen (20) für die mittlere Befestigung frei drehend auf ihren V-förmig ausgerichteten, eigenständigen Achsbolzen (21) montiert sind, **dadurch gekennzeichnet, dass** diese Achsbolzen (21) mittels eines zentralen Verbindungselementes (22) entsprechend einer bestimmten Krümmung demontierbar mit einem gegenüberliegenden Ende verbunden sind, wobei das zentrale Verbindungselement (22) mit einem Befestigungselement (23) verbunden ist, das die Aufnahme eines Endes des Kipphebels (24) ermöglicht, so dass er demontiert werden kann und frei beweglich ist, wobei das andere Ende des Kipphebels mit der Befestigungsklemme (25) verbunden ist, welche wiederum mit dem Spannseil (26) verbunden ist.

2. Vorrichtung nach Anspruch 1, **dadurch gekennzeichnet, dass** die freie Montage der Rollen auf ihren Verbindungsachsen mit dem Verbindungselement (22) eine Funktion gewährleistet, welche die Veränderung der Winkel α 1 und α 2, die von den Achsen der Rollen und der Horizontalachse der Anlage gebildet werden, ermöglicht, um der Lastveränderung Rechnung zu tragen.

3. Vorrichtung nach einem der vorhergehenden Ansprüche 1 und 2, **dadurch gekennzeichnet, dass** die Achsbolzen (21) der Rollen (20) für die mittlere Befestigung zusätzliche Verbindungsprofile (21a-21b) durch eine Einsteck- bzw. Aufnahmeverbindung oder eine beliebige andere Verbindung mit einem dazugehörigen Verbindungsbolzen (27) besitzen.

4. Vorrichtung nach einem der vorhergehenden Ansprüche 1 bis 3, **dadurch gekennzeichnet, dass** es sich bei dem zentralen Verbindungselement (22) um einen U-förmigen Bügel handelt, dessen Schenkel (22a-22b) Öffnungen (22c) zum Einschieben des Verbindungsbolzens (27) der Enden (21a-21b) von den Achsbolzen der Rollen (20) aufweisen.

5. Vorrichtung nach Anspruch 4, **dadurch gekennzeichnet, dass** das Befestigungselement (23) des Kipphebels (24) in der Form einer U-förmigen Gabelbefestigung konfiguriert ist, die mit dem Bügel demontierbar verbunden ist.

6. Vorrichtung nach Anspruch 5, **dadurch gekennzeichnet, dass** die Bodenseite (23a) der Gabelbefestigung (23), welche sich an der Außenseite (22d) eines der Schenkel des Bügels abstützt, eine Öffnung (23b) für den Durchgang des Verbindungsbolzens (27) und den Halt der Achsbolzen (21) der Rollen besitzt, wobei die Einheit durch eine Bolzenverbindung verriegelt wird.

7. Vorrichtung nach Anspruch 3, **dadurch gekennzeichnet, dass** der Kipphebel mit Hilfe eines Verbindungselementes (28) mit einem Ende an der Gabelbefestigung befestigt ist, wobei das Verbindungselement die Schenkel (23b) der Gabelbefestigung durch Öffnungen (23c) passiert, und das untere Ende des Kipphebels an der Befestigungsklemme (25), die an dem Spannseil befestigt ist, gelenkig angebracht ist.

8. Vorrichtung nach einem der vorhergehenden Ansprüche 1 bis 7, **gekennzeichnet durch** ihre Anwendung auf die oberen Bänder und das Unterband des Förderbandes.

## Claims

1. Improved automatic centring device on a conveyor having belts supported by flexible rollers (20) in garland structure, the nip varying with the transported load, the device being of the type including two lateral mountings (5) and a central mounting receiving the rollers (20) orientated to form a V-angulation, between which there is disposed an upper end of a rocker arm (24) subjected to a movement along a curved trajectory as a function of the variation in altitude due to the load of the conveyor, the said arm (24) cooperating at its lower end with a fastening lug fixedly connected to a cable (26) which is adjustable in tension relative to the carrier chassis of the conveyor, the said rollers (20) of the central mounting being mounted in a freely rotatable manner on their independent axles (21) orientated to form a V, **characterized in that** the said axles (21) are detachably joined together at a mutually facing end, according to a given angulation, by a central connecting means (22), the said central connecting means (22) being fixedly connected to a fastening means (23) allowing the reception of one end of the rocker arm (24) in a detachable manner and the articulation of the rocker arm (24), the other end of which is fixedly connected to the fastening lug (25) linked to the tension cable (26).

2. Device according to Claim 1, **characterized in that** the free mounting of the rollers at their axles connecting with the connecting means (22) ensures a functioning which allows the angles α1 and α2 formed by the said roller axles and the horizontal axis of the whole to be varied to take account of the variation in load.

3. Device according to either of Claims 1 and 2, **characterized in that** the axles (21) of the rollers (20) of the central mounting have complementary connecting profiles (21a-21b) through male-female or other assembly with an associated connecting pin (27).

4. Device according to any one of Claims 1 to 3, **characterized in that** the central connecting means (22) is a clamp of U-shaped profile, the wings (22a-22b) of which are provided with openings (22c) which allow the insertion of the connecting pin (27) for the ends (21a-21b) of the bearing axles of the rollers (20).

5. Device according to Claim 4, **characterized in that** the fastening means (23) for the rocker arm (24) is configured in the form of a clevis mounting of U-shaped profile, fixedly connected in a detachable manner relative to the clamp.

6. Device according to Claim 5, **characterized in that** the bottom face (23a) of the said clevis mounting (23) disposed resting on the outer face (22d) of one of the wings of the clamp has an opening (23b) allowing passage of the connecting and holding pin (27) for the bearing axles (21) of the rollers, a screw-bolt connection (27a) ensuring the locking of the whole.

7. Device according to Claim 5, **characterized in that** the rocker arm is fixed by one end to the said clevis mounting by a connecting means (28) passing through its wings (23b) through openings (23c), the lower end being hinge-mounted on the fastening lug (25) fixed on the tension cable.

8. Device according to any one of Claims 1 to 7, **characterized in** its application to the upper bands and to the return strand of the multi-belt conveyor.
